# EUROPEAN PATENT SPECIFICATION

(11) **EP 1 339 152 B1**
(45) Date of publication and mention of the grant of the patent: **27.07.2005**
(21) Application number: 01982496.0
(22) Date of filing: 02.11.2001
(51) Int. Cl.: H02H 9/04, G01R 1/36

(54) **PERTURBATIONS SUPPRESSOR FOR A MEASURING INTERFACE**
EINER MESSSCHNITTSTELLE ZUORDBARE EINRICHTUNG ZUR UNTERDRÜCKUNG VON STÖRUNGEN
SUPPRESSEUR DE PERTURBATIONS POUR UNE INTERFACE DE MESURES

(30) Priority: 02.11.2000 ES 200002627
(43) Date of publication of application: 27.08.2003
(73) Proprietor: Telefonica, S.A., 28013 Madrid (ES)
(72) Inventor: CAMPOY CERVERA, Luis, Miguel, E-28013 Madrid (ES)
(74) Representative: Carpintero Lopez, Francisco
(86) International application number: PCT/ES2001/000416
(87) International publication number: WO 2002/037636

(56) References cited:
- EP-A- 0 456 624
- GB-A- 2 136 646
- US-A- 4 347 475
- US-A- 4 571 656
- US-A- 5 379 176

## Description

### OBJECT OF THE INVENTION

The present descriptive memory relates to an application for an Invention Patent for a perturbations suppressor for a measurement interface, meant to act as a suppressor of network overvoltages with characteristics adjusted so that it fulfils a protection function that is coordinated with the general protection system of the installation, and allows a safe connection of circuits for measuring and remote control of the low-voltage network, even if these circuits have a low immunity to transients.

### FIELD OF THE INVENTION

This invention is applicable in the industry of telecommunications, and more specifically in the field of low voltage protections and in particular for use in measurement devices.

US-4,347,475 discloses a perturbations suppressor for connecting a power network via input/output terminals to an electronic equipment, comprising two stages for suppressing voltage transients on the network, which stages have the same structure as the stages of the suppressor according to the invention, whereby the second stage controls a transistor which connects the output of the first stage to the output terminal of the perturbations suppressor.

### BACKGROUND OF THE INVENTION

Many unattended installations are connected to remote control and measurement circuits in order to provide remote and reliable data of the installation's status.

These remote control and measurement equipment often have an input stage technology that is not suitable for direct connection to the general power input, one of the typical monitoring measurement points, giving rise to the appearance of electrical arcs in the measurement stages that in some cases can result in fires.

The applicant is aware of the existence of installations resulting from previous patents that are intended for protecting equipment subjected to perturbations on their power lines, and is not aware of the current existence of a suppressor for perturbations in a measurement interface that does not alter the signal and also is meant to protect the measurement stage of a monitor for the power network.

Introducing a filter in known installations disables them for use as a protection stage for a network-measuring device, as filtering distorts the value of the measurements.

The solution proposed for this problem is based on introducing a protection element, configured as a perturbation suppressor in a measurement interface, that is placed between the voltage measurement device and the connection to the low-voltage network so that it ensures that the maximum voltage at the measurement device is limited under the threshold of immunity.

### DESCRIPTION OF THE INVENTION

The perturbations suppressor for a measurement interface (PSMI) has as its main characteristic the presence of an initial stage with high impedance that, without appreciably altering the measurement value, can be uncoupled from the primary installation protection so that it is the latter that absorbs the energy of the transient.

More specifically, the perturbations suppressor for measurement interfaces object of the invention that acts as a suppressor of transients consists of an electric circuit that, in the case of a transient appearing in the power line, limits overvoltages transmitted to the measurement devices with a high impedance at the input.

The perturbations suppressor for measurement interfaces has two protection stages for the three phases and for the neutral, comprised of the following elements:
- A high ohm-value and high power resistor.
- A varistor.
- A second resistor for uncoupling power.
- A Zener-type voltage limiter for an exact limitation of the voltage during the transient.

It should be mentioned that the topology for connection of transient suppressors is completely dissimilar; in the case of known elements there is an initial stage with a low impedance that prevents its connection to the input stage of the power line installation due to the lack of coordination between these protectors and the primary protectors of the installations; but in the case of the present invention this problem is solved by the use of an initial high-impedance stage that forces most of the energy of the transients to be absorbed by the primary protectors.

The invention is provided with a double series parallel stage that ensures very low residual voltages when there are transients on the line, so that an improved protection is obtained at the measurement device input stage.

The first resistance, in addition to uncoupling the primary protector and the perturbations suppressor, has a high value so that in the event of permanent transients in the power network that result in a short-circuit failure of the varistors, the power dissipated at the resistor is lower than its nominal power, thereby preventing the risk of overheating.

The varistors have an operation voltage slightly greater than the operation voltage of the primary protectors of the installation, so that they only absorb the energy corresponding to residual voltages that arrive from the primary protectors in the presence of high transients.

Lastly, it should be mentioned that the invention considers a second protection stage comprised of a resistance and a Zener diode that reduce the transient voltage to a value very close to that of normal operation.

### DESCRIPTION OF THE DRAWINGS

As a complement of the description and in order to aid a better understanding of the characteristics of the invention, the present memory is accompanied as an integral part of the description by a single sheet of drawings where for purposes of illustration only and in a non-limiting manner the following is shown:

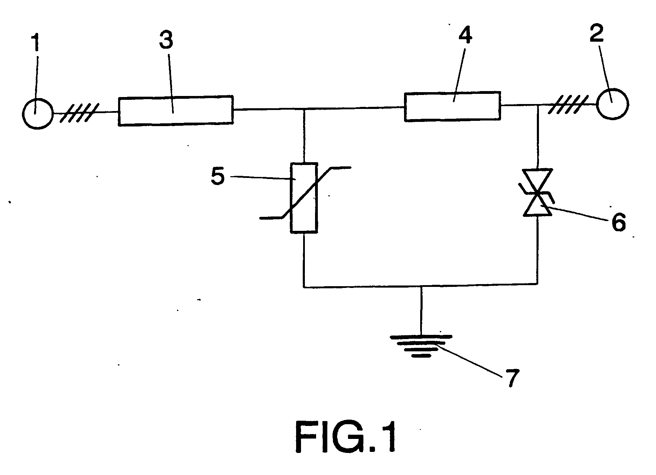

Figure 1 shows the electrical scheme of the invention, related to a perturbations suppressor for measurement interfaces.

### PREFERRED EMBODIMENT OF THE INVENTION

The perturbations suppressor for measurement interfaces disclosed is designed to operate connected to the 220V power input (1) of the low-voltage network, having a high input impedance and transient suppressors that ensure a residual voltage close to 400 V, although it is possible to adapt this to other values depending on the measurement circuit needs.

The suppressor is comprised of two protection stages, both for the three phases and for the neutral, consisting of a resistor with a high ohm value and a high power, a varistor (5), a second resistor (4) for uncoupling power and a Zener-type voltage limiter (6) for an exact limitation of the voltage during the transient.

The first resistor (3), in addition to providing an uncoupling between the primary protector and the suppressor, has a high value so that in the event of permanent transients in the power network that result in a short-circuit failure of the varistors, the power dissipated at the resistor (3) is lower than its nominal power, thereby preventing the risk of overheating.

The invention has a terminal (2) for connecting it to the measurement device, as well as a terminal (1) for connection to the 220V input.

As the suppressor is comprised of two protection stages, both for the three phases and the neutral, the invention consists of eight resistors, four varistors, four transient absorbers and two terminals, on for connection to the 220V input and the other to the measurement device.

In summary, the first, second and third phases, as well as the neutral, each have a resistor (3) with a high ohm value and a high power, a varistor (5), a second resistor (4), a voltage limiter (6) that acts as a transient absorber and two terminals.

Earth connection has been labelled as (7).

## Claims

1. A perturbations suppressor device having an input terminal (1) for connecting to a three-phase AC power network and an output terminal (2) for connecting to a measurement interface, whereby the power network comprises a primary protector, comprising
- for each of the three phases and neutral of the power network two protection stages,
- the first protection stage (3, 5) comprising a series connection of a first resistor (3) of a high ohmic value and of a high power and a varistor (5), the first resistor (3) is connected to the input terminal (1) at one end and to the varistor (5) at the other end, the other end of the varistor (5) being connected to an earth terminal (7) of the power network,
- the value of the first resistor (3) being such that in the event of permanent transients in the power network that result in a short-circuit failure of the varistor (5), the power dissipated at the first resistor (3) is lower than its nominal power,
- the varistor (5) operates at a voltage slightly greater than the operation voltage of the primary protectors of the power network, so that most of the energy of a transient is absorbed by the primary protectors of the power network and the varistor (5) only absorbs the energy corresponding to the residual voltage arriving from the primary protectors,
- the second protection stage (4, 6) comprising a series connection of a second resistor (4) and a zener-type voltage limiter (6), the second resistor (4) is connected to the connection between the first resistor (3) and the varistor (5) at one end and to the voltage limiter (6) at the other end, the other end of the voltage limiter (6) being connected to the earth terminal (7) of the power network,
- the output terminal (2) is connected to the connection between the second resistor (4) and the voltage limiter (6).

## Patentansprüche

1. Störungsunterdrückungsgerät mit einem Eingangsanschluß (1) zum Anschließen an ein Dreiphasenstromnetz und einem Ausgangsanschluß (2) zum Anschließen an eine Meßschnittstelle, wobei das Stromnetz eine primäre Schutzvorrichtung umfaßt, umfassend:
- für jede der drei Phasen und den Nulleiter des Stromnetzes zwei Schutzstufen,
- wobei die erste Schutzstufe (3, 5) eine Reihenschaltung eines ersten Widerstands (3) mit einem hohen Ohmwert und einer hohen Leistung und eines Varistors (5) umfaßt, wobei der erste Widerstand (3) an einem Ende an den Eingangsanschluß (1) und an dem anderen Ende an den Varistor (5) angeschlossen ist, wobei das andere Ende des Varistors (5) an einen Erdungsanschluß (7) des Stromnetzes angeschlossen ist,
- wobei der Wert des ersten Widerstands (3) derart ist, daß im Falle andauernder Stöße in dem Stromnetz, die zu einem Kurzschlußversagen des Varistors (5) führen, der Strom, der am ersten Widerstand (5) abgeführt ist, geringer als sein Nennstrom ist,
- wobei der Varistor (5) auf einer Spannung arbeitet, die etwas größer als die Betriebsspannung der primären Schutzvorrichtungen des Stromnetzes ist, so daß der größte Teil der Energie eines Stoßes durch die primären Schutzvorrichtungen des Stromnetzes aufgenommen ist und der Varistor (5) nur die Energie aufnimmt, die der Remanenzspannung entspricht, welche von den primären Schutzvorrichtungen ankommt,
- wobei die zweite Schutzstufe (4, 6) eine Reihenschaltung eines zweiten Widerstands (4) und eines Zenerspannungsbegrenzers (6) umfaßt, wobei der zweite Widerstand (4) an einem Ende an den Anschluß zwischen dem ersten Widerstand (3) und dem Varistor (5) und am anderen Ende an den Spannungsbegrenzer (6) angeschlossen ist, wobei das andere Ende des Spannungsbegrenzers (6) an den Erdungsanschluß (7) des Stromnetzes angeschlossen ist,
- wobei der Ausgangsanschluß (2) an den Anschluß zwischen dem zweiten Widerstand (4) und dem Spannungsbegrenzer (6) angeschlossen ist.

## Revendications

1. Dispositif de suppression de perturbations ayant une borne d'entrée (1) pour la connexion à un réseau d'alimentation en courant alternatif à trois phases et une borne de sortie (2) pour la connexion à une interface de mesure, **caractérisé en ce que** le réseau d'alimentation comprend un protecteur primaire, comprenant :
- pour chacune des trois phases et le neutre du réseau d'alimentation deux phases de protection,
- la première phase de protection (3, 5) comprenant une connexion en série d'une première résistance (3) de valeur ohmique élevée et de puissance élevée et d'une résistance (5), la première résistance (3) est connectée à la borne d'entrée (1) à une extrémité et à la varistance (5) à l'autre extrémité, l'autre extrémité de la varistance (5) étant connectée à la borne de terre (7) du réseau d'alimentation,
la valeur de la première résistance (3) étant telle que dans le cas de courants transitoires permanents dans le réseau d'alimentation qui résultent en une rupture de court-circuit de la varistance (5), la puissance dissipée à la première résistance (3) est inférieure à sa puissance nominale,
- la varistance (5) fonctionne à une tension légèrement supérieure à la tension de fonctionnement des courts-circuits protecteurs primaires du réseau d'alimentation, de manière telle que la majeure partie de l'énergie d'un courant transitoire est absorbée par les courts-circuits protecteurs primaires du réseau d'alimentation et la varistance (5) absorbe seulement l'énergie correspondant à la tension résiduelle arrivant des coupe-circuits protecteurs primaires,
- la seconde phase de protection (4, 5) comprenant une connexion en série d'une seconde résistance (4) et d'un limiteur de tension de type zener (6), la seconde résistance (4) est connectée à la connexion entre la première résistance (3) et la varistance (5) à une extrémité et au limiteur de tension (6) à l'autre extrémité, l'autre extrémité du limiteur de tension (6) étant connectée à la borne de terre (7) du réseau d'alimentation,
- la borne de sortie (2) est connectée à la connexion entre la seconde résistance (4) et le limiteur de tension (6).
